# EUROPÄISCHE PATENTSCHRIFT

(11) **EP 1 225 456 B1**
(45) Veröffentlichungstag und Bekanntmachung des Hinweises auf die Patenterteilung: **03.06.2009**
(21) Anmeldenummer: 02000450.3
(22) Anmeldetag: 08.01.2002
(51) Int. Cl.: G01S 15/04, G08B 13/16, B60R 25/10

(54) **System und Verfahren zur Überwachung eines von Wänden umschlossenen Raumes**
System and method for the monitoring of a space surrounded by walls
Système et procédé de surveillance d'un espace enfermé par des parois

(30) Priorität: 10.01.2001 DE 10100806
(43) Veröffentlichungstag der Anmeldung: 24.07.2002
(73) Patentinhaber: Delphi Technologies, Inc., Troy, MI 48007 (US)
(72) Erfinder: Noll, Diethelm, 57589 Birkenbeul (DE); Bunse, Rainer, 51597 Morsbach (DE)
(74) Vertreter: Denton, Michael John

(56) Entgegenhaltungen:
- EP-A- 0 368 303
- EP-A- 0 605 993
- EP-A- 0 647 550
- GB-A- 2 284 498
- GB-A- 2 319 842
- US-A- 4 106 003

## Beschreibung

Die vorliegende Erfindung betrifft eine System und ein Verfahren zur Überwachung eines von Wänden umschlossenen Raumes, insbesondere des Innenraumes eines Kraftfahrzeuges, mit einer Schallquelle zur Erzeugung von Ultraschallwellen in dem Raum, einem Schallempfänger zum Empfang der Ultraschallwellen in dem Raum und einer Mess- und Auswerteeinheit zur Bestimmung des Vorliegens eines Alarmzustandes, insbesondere aus der Zeitverzögerung zwischen ausgesendetem und empfangenem Schallsignal.

Derartige Systeme und Verfahren beruhen darauf, dass Ultraschall, der in einem geschlossenen Raum ausgestrahlt wird, dort ein im wesentlichen homogenes Schallfeld bildet. Wenn der Ultraschall in dem Raum von einem Empfänger aufgenommen wird, kann das Volumen des Raumes über die Laufzeit des Ultraschalles bestimmt werden. Auf diese Weise kann festgestellt werden, ob sich das Volumen des Raumes verändert hat.

Derartige Systeme und Verfahren werden beispielsweise zur Überwachung des Innenraums von Kraftfahrzeugen eingesetzt. Hierfür werden Ultraschallsensoren verwendet, siehe Z.B EP 0 368 303. Wird beispielsweise mit der Hand in das Innere des Fahrzeuges gegriffen, so ändert sich das Volumen, und es wird Alarm ausgelöst.

Dieses System und Verfahren kann jedoch durch zusätzliche Schallquellen gestört werden, die das vorhandene Ultraschallfeld überlagern. Es ist dann nicht mehr möglich, zwischen einer Veränderung des Volumens des Raumes, also einem Eingriff von außen, und einer Störung, also einem Fehlalarm zu unterscheiden. Eine Möglichkeit, zusätzlichen Ultraschall zu erzeugen, besteht darin, auf die Wände des geschlossenen Raumes zu schlagen. Diese Wand wirkt dann als zusätzliche Schallquelle in dem überwachten Raum. Ein Beispiel besteht darin, auf die Scheiben eines Fahrzeuges zu schlagen.

Weitere Systeme sind aus GB 2 284 498, EP 0 605 993, und EP 0 647 550 bekannt.

Der Erfindung liegt die Aufgabe zugrunde, ein System und ein Verfahren der eingangs genannten Art so weiterzubilden, dass dieses Problem nicht mehr auftritt. Insbesondere soll zwischen einer Störung von außen durch Schlagen auf eine Wand des Raumes und einer Volumenveränderung des Raumes unterschieden werden können.

Diese Aufgabe wird dadurch gelöst, dass zusätzlich mindestens eine Vibrationsmesseinrichtung vorgesehen ist, mittels welcher Vibrationen der den Raum umschließenden Wände feststellbar sind und die mit einem Eingang der Mess- und Auswerteeinheit zur Bestimmung des Vorliegens eines Alarmzustandes verbunden ist, und dass Mittel vorgesehen sind, durch welche ein Alarmsignal unterdrückt wird, wenn die Mess- und Auswerteeinheit (4) zusätzlich zu einem Ultraschallsignal eine Vibrationssignal erfasst.

Die Erfindung beruht auf der Erkenntnis, dass das Schlagen auf eine Wand des überwachten Raumes zu einer Vibration dieser Wand oder des gesamten Systems führt. Durch das Vorsehen mindestens einer Vibrationsmesseinrichtung kann daher eine solche Störung festgestellt werden. Das Ausgangsignal der Vibrationsmesseinrichtung stellt somit eine zusätzliche Information dar, die bei der Beurteilung des Vorliegens einer Alarmsituation berücksichtigt werden kann. Stellt das System eine Volumenveränderung durch eine veränderte Laufzeit der Schallsignale fest und wird keine Vibration gemessen, so liegt eine tatsächliche Alarmsituation vor. Treten dagegen zusätzlich Vibrationen auf, so liegt ein Fehlalarm oder eine bewusste Störung des Systems vor.

Als Vibrationsmesseinrichtung ist bevorzugt ein Beschleunigungssensor vorgesehen. Dabei kann vorteilhafterweise ein im Fahrzeug bereits vorhandener Beschleunigungssensor mitverwendet werden. Das heißt, die Ausgangssignale des vorhandenen Beschleunigungssensors werden in der Mess- und Auswerteeinheit des erfindungsgemäßen Systems mitverarbeitet. Das erfindungsgemäße System kann auf diese Weise besonders kostengünstig realisiert werden.

Eine Erhöhung der Messgenauigkeit kann nach einer weiteren Ausgestaltung der Erfindung dadurch erreicht werden, dass Beschleunigungsmesser vorgesehen sind, die in Richtung von mindestens zwei zueinander senkrechten Achsen wirksam sind. Die Erfassung von Schlägen auf eine Wand des Fahrzeuges kann dadurch verbessert werden. Auch in diesem Falle eines sogenannten Zwei-Achs-Sensors werden bevorzugt im Fahrzeug bereits vorhandene Sensoren mitverwendet.

Eine weitere Verbesserung der Überwachung kann dadurch erreicht werden, dass Amplitude und Frequenz der Vibrationen festgestellt werden. Damit liegen weitere Informationen vor, die bei der Auswertung berücksichtigt werden können.

Ein Ausführungsbeispiel der Erfindung ist in der Zeichnung dargestellt und wird nachfolgend beschrieben. In schematischer Darstellung zeigt:

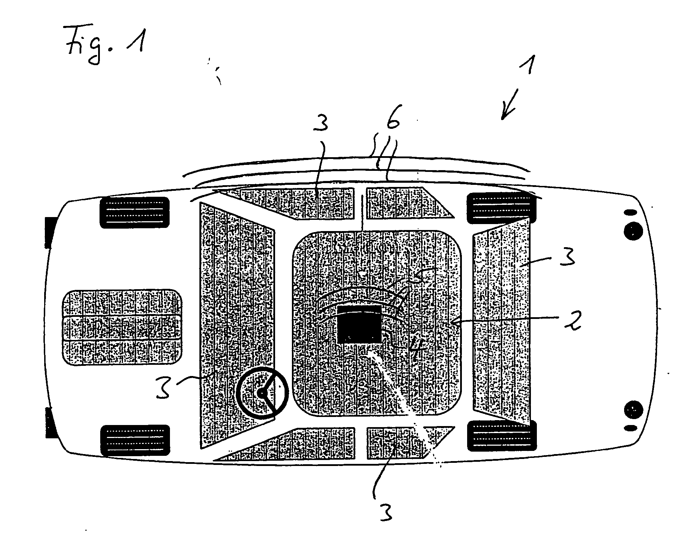

- Figur 1: eine Draufsicht auf ein Fahrzeug mit einem erfindungsgemäßen Überwachungssystem.

In einem Fahrzeug 1 bildet die Fahrgastzelle einen Raum 2, der von Wänden 3 wie den Fenstern, dem Fahrzeugboden und dem Fahrzeugdach umschlossen ist. Innerhalb der Fahrgastzelle 2 ist ein Ultraschallsystem 4 angeordnet, welches neben einem Schallerzeuger und einem Schallempfänger mindestens einen Beschleunigungssensor aufweist. Außerdem umfasst das Ultraschallsystem 4 eine Mess- und Auswerteeinheit.

Über den Ultraschallerzeuger werden im Fahrgastraum 2 Ultraschallwellen 5 erzeugt, die aufgrund der Abgeschlossenheit des Fahrgastraumes 2 ein im wesentlichen homogenes Ultraschallfeld bilden. Über den Ultraschallempfänger oder -sensor wird dieses Ultraschallfeld aufgenommen und als Messsignal an die Mess- und Auswerteeinheit weitergegeben.

Findet nun ein Eingriff in den Fahrgastraum 2 statt, beispielsweise indem in den Fahrgastraum 2 mit einer Hand hineingriffen wird, so verändert sich das Ultraschallfeld, was in der Mess- und Auswerteeinheit festgestellt werden kann. Die Überwachung kann dabei insbesondere über eine Volumenmessung erfolgen, indem das Volumen des Fahrgastraumes mittels der Laufzeit der Ultraschallsignale errechnet wird. Bei Eingreifen einer Hand oder eines anderen Körpers in den Fahrgastraum 2 ändert sich dessen Volumen und damit die Laufzeit der Schallsignale. Diese Änderung wird in der Mess- und Auswerteeinheit festgestellt und zur Erzeugung eines Ausgangssignales verwendet.

Über den im Ultraschallsystem 4 vorhandenen Beschleunigungssensor wird zugleich überwacht, ob Vibrationen 6 des Fahrzeuges 1, insbesondere der den Fahrgastraum 2 umgebenden Wände 3 auftreten. Der Beschleunigungssensor kann dabei in den Ultraschallsensor integriert sein, so dass die Vibrationen 6 direkt gemessen werden können. Werden Vibrationen 6 festgestellt, so wird dies bei der Auswertung der Messsignale durch die Mess- und Auswerteeinheit berücksichtigt. Das heißt, das Ausgangssignal der Mess- und Auswerteeinheit hängt sowohl vom Signal des Ultraschallsensors als auch vom Signal des Beschleunigungssensors ab.

Erfasst die Mess- und Auswerteeinheit beispielsweise nur ein Ultraschallsignal, so liegt ein Eingriff in den Fahrgastraum 2 vor, und es wird ein Alarmsignal ausgegeben. Erfasst die Mess- und Auswerteeinheit dagegen zusätzlich ein Vibrationssignal, so wird das Alarmsignal unterdrückt, da das erfasste Ultraschallsignal von Vibrationen einer Wand 3 des Fahrgastraumes 2 herrührt. Werden die Vibrationen in mindestens zwei zueinander senkrechten Richtungen gemessen, so kann die Auswertung noch differenzierter erfolgen. Dasselbe gilt bei Messung von Frequenz und Amplitude der Vibration.

Mit dem erfindungsgemäßen System wird die Ultraschallüberwachung von geschlossenen Räumen verbessert. Insbesondere können Fehlalarme vermieden werden. Die Kosten für die Realisierung des erfindungsgemäßen Systems können dabei relativ niedrig gehalten werden, wenn im Fahrzeug bereits vorhandene Beschleunigungssensoren für die Messung der Vibrationen 6 mitverwendet werden.

### Bezugszeichenliste

- 1: Fahrzeug
- 2: Fahrgastraum
- 3: Wand
- 4: Ultraschallsystem
- 5: Schallwelle
- 6: Vibration

## Patentansprüche

1. System zur Überwachung eines von Wänden (3) umschlossenen Raumes (2), insbesondere des Innenraumes eines Kraftfahrzeuges, mit einer Schallquelle (4) zur Erzeugung von Ultraschallwellen in dem Raum (2), einem Schallempfänger (4) zum Empfang der Ultraschallwellen in dem Raum (2) und einer Meß- und Auswerteeinheit (4) zur Bestimmung des Vorliegens eines Alarmzustandes, insbesondere aus der Zeitverzögerung zwischen ausgesendetem und empfangenem Ultraschallsignal,
**dadurch gekennzeichnet,**
**dass** zusätzlich mindestens eine Vibrationsmesseinrichtung (4) vorgesehen ist, mittels welcher Vibrationen der den Raum (2) umschließenden Wände (3) feststellbar sind und die mit einem Eingang der Meß- und Auswerteeinheit (4) zur Bestimmung des Vorliegens eines Alarmzustandes verbunden ist, und dass Mittel vorgesehen sind, durch welche ein Alarmsignal unterdrückt wird, wenn die Mess- und Auswerteeinheit (4) zusätzlich zu einem Ultraschallsignal eine Vibrationssignal erfasst.

2. System nach Anspruch 1,
**dadurch gekennzeichnet,**
**dass** ein Beschleunigungsmesser als Vibrationsmesseinrichtung (4) vorgesehen ist.

3. System nach Anspruch 2,
**dadurch gekennzeichnet,**
**dass** Beschleunigungsmesser vorgesehen sind, die in Richtung von mindestens zwei zueinander senkrechten Achsen wirksam sind.

4. System nach einem der vorhergehenden Ansprüche,
**dadurch gekennzeichnet,**
**dass** die Vibrationsmesseinrichtung (4) zur Messung von Amplitude und/oder Frequenz der Vibrationen ausgebildet ist.

5. System nach einem der vorhergehenden Ansprüche,
**dadurch gekennzeichnet,**
**dass** die Vibrationsmesseinrichtung (4) in den Schallempfänger (4) integriert ist.

6. Verfahren zur Überwachung eines von Wänden (3) umschlossenen Raumes (2), insbesondere des Innenraumes eines Kraftfahrzeuges, bei welchem in dem Raum (2) mit einer Schallquelle Ultraschallwellen erzeugt, in dem Raum (2) vorhandene Ultraschallwellen von einem Schallempfänger aufgenommen und einer Meß- und Auswerteeinheit, zur Bestimmung des Vorliegens eines Alarmzustandes, zugeleitet werden,
**dadurch gekennzeichnet,**
**dass** zusätzlich Vibrationen der den Raum (2) umschließenden Wände (3) aufgenommen und zusammen mit den Ultraschallsignalen des Schallempfängers ausgewertet werden und dass ein Alarmsignal unterdrückt wird, wenn die Mess- und Auswerteeinheit (4) zusätzlich zu einem Ultraschallsignal eine Vibrationssignal erfasst.

7. Verfahren nach Anspruch 6,
**dadurch gekennzeichnet,**
**dass** die Frequenz und/oder die Amplitude der Vibrationen gemessen und ausgewertet werden.

8. Verfahren nach Anspruch 6 oder 7,
**dadurch gekennzeichnet,**
**dass** die Vibrationen in mehr als einer Richtung gemessen werden.

9. Verfahren nach einem der Ansprüche 6 bis 8,
**dadurch gekennzeichnet,**
**dass** mindestens eine Beschleunigungsmeßeinrichtung zur Messung der Vibrationen verwendet wird.

10. Verfahren nach Anspruch 9,
**dadurch gekennzeichnet,**
**dass** eine bereits vorhandene Beschleunigungsmeßeinrichtung mitverwendet wird.

11. Verfahren nach einem der Ansprüche 6 bis 10,
**dadurch gekennzeichnet,**
**dass** aus der Zeitverzögerung des ausgesendeten und des empfangenen Schallsignals das Volumen des überwachten Raumes (2) bestimmt.

## Claims

1. System for monitoring a space (2) surrounded by walls (3), in particular the interior of a motor vehicle, with a sound source (4) for generation of ultrasonic waves in the space (2), a sound receiver (4) for reception of the ultrasonic waves in the space (2), and a measuring and evaluation unit (4) for determination of existence of an alarm condition, in particular from the time delay between emitted and received ultrasonic signal,
**characterized in that**
additionally at least one vibration measuring device (4) is provided, by means of which vibrations of the walls (3) enclosing the space (2) are detectable and which is connected with an input of the measuring and evaluation unit (4) for determination of existence of an alarm condition, and **in that** means are provided that suppress an alarm signal, if the measuring and evaluation unit (4) detects a vibration signal in addition to an ultrasonic signal.

2. System according to claim 1,
**characterized in that**
an accelerometer is provided as vibration measuring device (4).

3. System according to claim 2,
**characterized in that**
a plurality of accelerometers is provided, which are effective toward at least two perpendicular axes.

4. System according to one of the preceding claims,
**characterized in that**
the vibration measuring device (4) is adapted for measurement of amplitude and/or frequency of the vibrations.

5. System according to one of the preceding claims,
**characterized in that**
the vibration measuring device (4) is integrated into the sound receiver (4).

6. Method for monitoring a space (2) surrounded by walls (3), in particular the interior of a motor vehicle,
wherein ultrasonic waves are generated by a sound source (4) in the space (2), ultrasonic waves in the space (2) are received by a sound receiver (4) and are provided to a measuring and evaluation unit (4) for determination of existence of an alarm condition,
**characterized in that**
vibrations of the walls (3) enclosing the space (2) are detected additionally and evaluated together with the ultrasonic signals of the sound receiver and an alarm signal is suppressed, if the measuring and evaluation unit (4) detects a vibration signal in addition to an ultrasonic signal.

7. Method according to claim 6,
**characterized in that**
the frequency and/or the amplitude of the vibrations are measured and evaluated.

8. Method according to claim 6 or 7,
**characterized in that**
the vibrations are measured in more than one direction.

9. Method according to one of the claims 6 to 8,
**characterized in that**
at least one acceleration measuring device is used for measurement of the vibrations.

10. Method according to claim 9,
**characterized in that**
an acceleration measuring device already present is co-used.

11. Method according to one of the claims 6 to 10,
**characterized in that**
the volume of the monitored space (2) is determined from the time delay of the emitted and the received sound signal.

## Revendications

1. Système pour surveiller un espace (2) enfermé par des parois (3), en particulier l'espace intérieur d'un véhicule automobile, comprenant une source sonore (4) pour générer des ondes ultrasonores dans l'espace (2), un récepteur sonore (4) pour la réception des ondes ultrasonores dans l'espace (2), et unité de mesure et d'évaluation (4) pour déterminer la présence d'un état d'alarme, en particulier à partir du retard temporel entre le signal ultrasonore émis et le signal ultrasonore reçu,
**caractérisé en ce que**
il est prévu additionnellement au moins un dispositif de mesure de vibrations (4) au moyen duquel des vibrations des parois (3) qui enferment l'espace (2) peuvent être constatées, et qui est connecté à une entrée de l'unité de mesure et d'évaluation (4) pour déterminer la présence d'un état d'alarme, et **en ce qu'**il est prévu des moyens grâce auxquels un signal d'alarme est inhibé quand l'unité de mesure et d'évaluation (4) détecte un signal de vibrations en supplément à un signal ultrasonore.

2. Système selon la revendication 1,
**caractérisé en ce qu'**il est prévu un accéléromètre à titre de dispositif de mesure de vibrations (4).

3. Système selon la revendication 1 2,
**caractérisé en ce qu'**il est prévu des accéléromètres qui agissent en direction d'au moins deux axes perpendiculaires l'un à l'autre.

4. Système selon l'une des revendications précédentes,
**caractérisé en ce que** le dispositif de mesure de vibrations (4) est réalisé pour la mesure d'amplitude et/ou de fréquence des vibrations.

5. Système selon l'une des revendications précédentes,
**caractérisé en ce que** le dispositif de mesure de vibrations (4) est intégré dans le récepteur sonore (4).

6. Procédé pour la surveillance d'un espace (2) enfermé par des parois (3), en particulier l'espace intérieur d'un véhicule automobile, dans lequel on génère dans l'espace (2) des ondes ultrasonores avec une source sonore, les ondes ultrasonores présentes dans l'espace (2) sont captées par un récepteur sonore et amenées à une unité de mesure et d'évaluation, pour déterminer la présence d'un état d'alarme,
**caractérisé en ce que** l'on capte en supplément des vibrations des parois (3) qui enferment l'espace (2) et on les évalue conjointement avec les signaux ultrasonores du récepteur sonore, et en se qu'un signal d'alarme est inhibé quand l'unité de mesure et d'évaluation (4) détecte, en supplément à un signal ultrasonore, un signal de vibrations.

7. Procédé selon la revendication 6,
**caractérisé en ce que** la fréquence et/ou l'amplitude des vibrations est mesurée et évaluée.

8. Procédé selon la revendication 6 ou 7,
**caractérisé en ce que** les vibrations sont mesurées dans plus d'une direction.

9. Procédé selon l'une des revendications 6 à 8,
**caractérisé en ce que** l'on utilise au moins un système de mesure d'accélération pour mesurer les vibrations.

10. Procédé selon la revendication 9,
**caractérisé en ce que** l'on utilise conjointement un système de mesure d'accélération déjà existant.

11. Procédé selon l'une des revendications 6 à 10,
**caractérisé en ce que** l'on détermine le volume de l'espace surveillé (2) à partir du retard temporel du signal sonore émis et du signal sonore reçu.
